(19) Europäisches Patentamt
European Patent Office
Office européen des brevets

(11) **EP 4 604 387 A1**

(12) **EUROPEAN PATENT APPLICATION**
published in accordance with Art. 153(4) EPC

(43) Date of publication:
**20.08.2025 Bulletin 2025/34**

(21) Application number: **23878680.0**

(22) Date of filing: **26.06.2023**

(51) International Patent Classification (IPC):
**H02P 29/62** (2016.01)    **F24F 11/48** (2018.01)

(52) Cooperative Patent Classification (CPC):
**F24F 11/48; H02P 29/62**

(86) International application number:
**PCT/CN2023/102462**

(87) International publication number:
**WO 2024/082683 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.10.2022 CN 202211268900
10.11.2022 CN 202211403253**

(71) Applicant: **GD Midea Air-Conditioning Equipment
Co., Ltd.
Foshan, Guangdong 528311 (CN)**

(72) Inventors:
• **LIU, Wenlong
Foshan, Guangdong 528311 (CN)**

• **LONG, Tan
Foshan, Guangdong 528311 (CN)**
• **HU, Bin
Foshan, Guangdong 528311 (CN)**
• **ZHOU, Hongming
Foshan, Guangdong 528311 (CN)**
• **HUANG, Zhaobin
Foshan, Guangdong 528311 (CN)**
• **XU, Yunsong
Foshan, Guangdong 528311 (CN)**
• **BI, Ran
Foshan, Guangdong 528311 (CN)**
• **WEI, Dong
Foshan, Guangdong 528311 (CN)**

(74) Representative: **RGTH
Patentanwälte PartGmbB
Neuer Wall 10
20354 Hamburg (DE)**

(54) **ELECTRIC MOTOR HEATING METHOD AND SYSTEM, AND STORAGE MEDIUM AND AIR CONDITIONER**

(57)    An electric motor (5) heating method and system, and a storage medium and an air conditioner, which relate to the technical field of air conditioners. The electric motor (5) heating method comprises: when it is determined that an electric motor (5) needs to be pre-heated, controlling any two phases of driving bridge arms in an electric motor driver (6), such that two corresponding phases of loops generate a periodically changing current, thereby pre-heating the electric motor (5).

FIG. 2

## Description

### CROSS-REFERENCE TO RELATED APPLICATIONS

This application claims priority to Chinese patent application No. 202211268900.5, titled "COMPRESSOR PREHEATING CONTROL METHOD AND APPARATUS, DEVICE, AND STORAGE MEDIUM" and filed on October 17, 2022, and Chinese patent application No. 202211403253.4, titled "ELECTRIC MOTOR HEATING METHOD AND SYSTEM, AND STORAGE MEDIUM AND AIR CONDITIONER" and filed on November 10, 2022, the entire contents of which are incorporated herein by reference.

### FIELD

The present disclosure relates to the field of air conditioning technologies, and in particular, to a method and system for heating a motor, a storage medium, and an air conditioner.

### BACKGROUND

In an air conditioning compressor system, when an outdoor temperature is relatively low, it is difficult for a lubricating oil in the compressor to provide lubrication, which leads to difficulties in starting the compressor. To solve this problem, a heating tape is wrapped around an outer periphery of the compressor in the related art to preheat the compressor, ensuring normal startup and operation of the compressor. However, in this technique, heat radiation enters and heats a compressor casing first, then a compressor cylinder, which results in a low heating efficiency. In addition, mounting of the heating tape also increases complexity and costs of air conditioner production.

### SUMMARY

The present disclosure aims to solve at least one of the technical problems in the related art to some extent. To this end, an objective of the present disclosure is to provide a method and system for heating a motor, a storage medium, and an air conditioner, for heating the motor at low costs and with a high efficiency.

To achieve the above objective, according to an embodiment in a first aspect of the present disclosure, a method for heating a motor is provided. The method comprises: controlling, in response to determining that the motor needs to be preheated, any two-phase drive bridge arms in a motor driver to generate periodically varying currents in corresponding two-phase circuits to realize preheating of the motor.

To achieve the above objective, according to an embodiment in a second aspect of the present disclosure, a computer-readable storage medium is provided. The computer-readable storage medium stores a computer program. The computer program, when executed by a processor, implements the above method.

To achieve the above objective, according to an embodiment in a third aspect of the present disclosure, a system for heating a motor is provided. The system comprises: the motor; a motor driver connected to the motor; and a controller comprising a processor and a memory for storing a computer program executable on the processor. The processor performs, when executing the computer program, the above method.

To achieve the above objective, according to an embodiment in a fourth aspect of the present disclosure, an air conditioner is provided. The air conditioner comprises the above system for heating the motor.

With the method and system for heating the motor, the storage medium, and the air conditioner according to the embodiments of the present disclosure, any two-phase drive bridge arms in the motor driver are controlled, in response to determining that the motor needs to be preheated, to generate the periodically varying currents in the corresponding two-phase circuits to realize the preheating of the motor. That is, through inputting a desired alternating current into a motor winding to heat the motor by the alternating current, the motor is heated with the high efficiency without mounting an additional device, resulting in relatively low costs.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

FIG. 1 is a structural view of a motor according to an example of the present disclosure.
FIG. 2 is a flowchart illustrating a method for heating a motor according to an embodiment of the present disclosure.

FIG. 3 is a flowchart illustrating a method for heating a motor according to another embodiment of the present disclosure.

FIG. 4 is a working schematic diagram showing a method for heating a motor according to an example of the present disclosure.

FIG. 5 is a working schematic diagram showing a method for heating a motor according to another example of the present disclosure.

FIG. 6 is a working schematic diagram showing a method for heating a motor according to yet another example of the present disclosure.

FIG. 7 is a working schematic diagram showing a method for heating a motor according to still yet another example of the present disclosure.

FIG. 8 is a working schematic diagram showing a method for heating a motor according to still yet another example of the present disclosure.

FIG. 9 is a working schematic diagram showing a method for heating a motor according to still yet another example of the present disclosure.

FIG. 10 is a block diagram showing a structure of a system for heating a motor according to an embodiment of the present disclosure.

FIG. 11 is a block diagram showing a structure of an air conditioner according to an embodiment of the present disclosure.

FIG. 12 is a flowchart illustrating a method for heating a motor according to yet another embodiment of the present disclosure.

FIG. 13A to FIG. 13F each are a schematic diagram showing a winding state or PWM signal switching timing in each operation state in an application example.

FIG. 14 is a schematic diagram showing an operation state of a preheating control process of a compressor in an application example of the present disclosure.

FIG. 15 is a schematic diagram showing an operation state of a preheating control process of a compressor in another application example of the present disclosure.

FIG. 16 is a schematic diagram showing signal switching timing in a preheating control process of a compressor in an application example of the present disclosure.

FIG. 17 is a schematic diagram showing a structure of an apparatus for preheating control of a compressor according to an embodiment of the present disclosure.

FIG. 18 is a schematic diagram showing a structure of a device for preheating control of a compressor according to an embodiment of the present disclosure.

## DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

A method and system for heating a motor, a storage medium, and an air conditioner according to the embodiments of the present disclosure are described below with reference to the accompanying drawings.

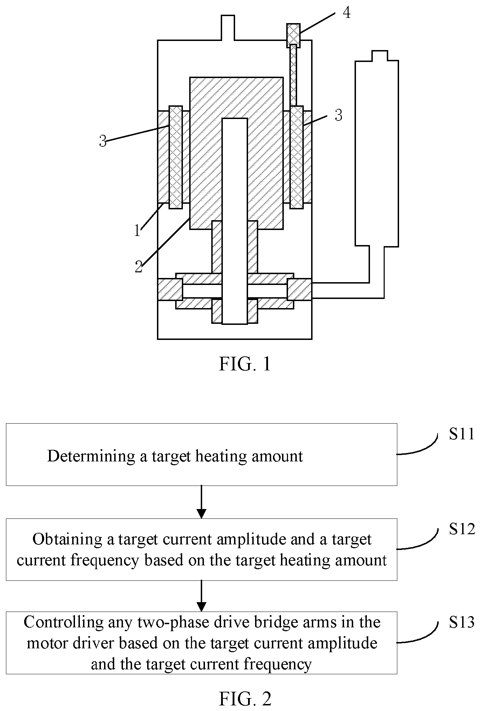

Referring to a motor structure view illustrated in FIG. 1, the motor is a three-phase motor (such as a motor of a compressor in an air conditioner), which comprises a stator 1, a rotor 2, a winding 3, and a terminal 4. The winding 3 is energized through the terminal 4 to generate a current, which in turn drives the rotor 2 to rotate relative to the stator 1 under an electromagnetic induction effect. Therefore, in the related art, an electronically controlled inverter module is further used and configured to generate a low-frequency rotating voltage or an intermittently commutated direct current voltage, in such a manner that the motor generates a low-frequency current, resulting in heating from the winding 3 due to a copper loss. For example, preheating of a direct-current current winding mainly relies on the copper loss from a resistance of the winding during a current flow, with preheating power being calculated as $P=I^2R$. For example, preheating of a low-frequency current winding mainly relies on the copper loss from the resistance of the winding during the current flow, with the preheating power being calculated as $P=I^2R$. The term "low-frequency" refers to a low frequency of the current, usually equal to or smaller than 1 Hz. To achieve a relatively satisfactory preheating effect, a higher current is needed, which means a relatively high electronic control loss. If heat dissipation cannot be performed timely, reliability of electronic control components cannot be guaranteed.

A source of heat generation of the motor is mainly composed of two parts: one part is the above copper loss generated by the current in the winding; the other part is an eddy current loss and a hysteresis loss generated by an iron core, hereinafter referred to as an iron loss. For the iron loss, when a high-frequency alternating current is input into the winding 3, the high-frequency alternating current generates a high-frequency alternating magnetic field. The magnetic field acts on the iron core of the stator, generating heat due to the eddy current loss and the hysteresis loss to heat the motor.

It should be noted that the copper loss is related to a current effective value and the resistance of the winding, independent of the current frequency. The eddy current loss in the iron loss is positively related to the current frequency, while the hysteresis loss is positively related to a square of the current frequency. The relationship can be expressed by the following equation:

$$P_{M,Fe} = \sum_k \left( K_{M,hyst} f_{ci,k} B^2_{Mpeak,k} + K_{M,eddy} f^2_{ci,k} B^2_{Mpeak,k} \right).$$

In the equation, k represents a quantity of iron cores, $K_{M,hyst}$ represents a first coefficient, $K_{M,eddy}$ represents a second coefficient, represents the current frequency, $B_{Mpeak,\ k}$ represents a peak magnetic induction intensity, $f_{ci,k}$ represents the current frequency, and $P_{M,Fe}$ represents a loss.

Obviously, when a frequency of variation increases to a predetermined degree, heating can rely more on the heat generated by the iron core. Since a current amplitude is small, the heat generated by the winding is small, while a power component in a circuit also generates relatively little heat, protecting both the motor winding and the power component.

Based on this, according to the embodiments of the present disclosure, a method for heating a motor is provided, which can not only effectively reduce the electronic control loss during preheating, but also effectively ensure heating power during the preheating.

FIG. 2 is a flowchart illustrating a method for heating a motor according to an embodiment of the present disclosure.

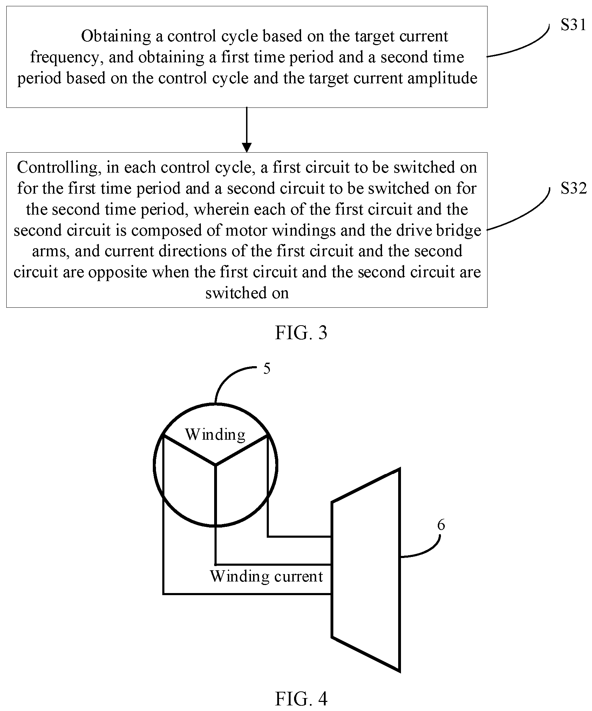

As illustrated in FIG. 3, the method for heating the motor comprises operations at blocks.

**At** S11, a target heating amount is determined.

At S12, a target current amplitude and a target current frequency are obtained based on the target heating amount.

At S13, any two-phase drive bridge arms in the motor driver are controlled based on the target current amplitude and the target current frequency.

Specifically, in response to determining that the motor needs to be preheated based on an ambient temperature, an ambient temperature of an environment in which the motor is located is obtained and the target heating amount is obtained based on the ambient temperature, or a predetermined heating target is obtained and the target heating amount is determined based on the predetermined heating target. The target current amplitude and the target current frequency are obtained based on the target heating amount, in such a manner that the drive bridge arm of the motor driver is controlled to input a required alternating current into the motor winding. The magnitude of the above target current amplitude should be equal to or smaller than a rated current of the motor. The value of the above target current frequency can be greater than 10 khz.

As a result, the target current amplitude and the target current frequency can be obtained based on the target heating amount. The drive bridge arm in the motor driver can be controlled based on the target current amplitude and the target current frequency to input the required alternating current into the motor winding. Heat is generated by the motor through the alternating current. Therefore, the motor is heated with a high efficiency without mounting an additional device, resulting in relatively low costs. In addition, since the heating is performed through the alternating current, the motor can be preheated at a relatively small target current amplitude through inputting the high-frequency alternating current into the motor winding, protecting the motor winding and the power component in the circuit.

In some embodiments of the present disclosure, as illustrated in FIG. 3, controlling any two-phase drive bridge arms in the motor driver based on the target current amplitude and the target current frequency comprises operations at blocks.

At S31, a control cycle is obtained based on the target current frequency, and a first time period and a second time period are obtained based on the control cycle and the target current amplitude.

At S32, in each control cycle, a first circuit is controlled to be switched on for the first time period and a second circuit is controlled to be switched on for the second time period. Each of the first circuit and the second circuit is composed of motor windings and drive bridge arms. Current directions of the first circuit and the second circuit are opposite when the first circuit and the second circuit are switched on.

Referring to the example illustrated in FIG. 4, the motor comprises three-phase windings. The motor driver is configured to control a winding current flowing into the motor, in such a manner that the motor is operable under drive of the motor driver. In the example illustrated in FIG. 4, the motor is a compressor motor 5, and the motor driver is a compressor driver 6 and is implemented as a three-phase inverter. The three-phase windings illustrated in FIG. 4 are referred to as an A-phase motor winding, a B-phase motor winding, and a C-phase motor winding. The power components comprised in the compressor driver 6 in FIG. 4 are six power switching transistors, namely Insulated Gate Bipolar Transistors (IGBTs). The six power switching transistors form a three-phase bridge inverter circuit, comprising three-phase bridge arms, i.e., a U-phase bridge arm, a V-phase bridge arm, and a W-phase bridge arm. Further, the U-phase bridge arm comprises an upper bridge arm U+ and a lower bridge arm U-, the V-phase bridge arm comprises an upper bridge arm V+ and a lower bridge arm V-, and the W-phase bridge arm comprises an upper bridge arm W+ and a lower bridge arm W-. Neutral points of the three-phase bridge arms are connected to windings of the three-phase motor in one-to-one correspondence.

Of course, the power component comprised in the motor driver may also be a Metal-Oxide-Semiconductor Field-Effect Transistor (MOSFET), and the motor driver may also be an Intelligent Power Module (IPM). The above motor may also be other load motors such as a fan. The winding in the motor may be in a star-connected configuration, a delta-connected configuration, or a three-phase open-winding configuration.

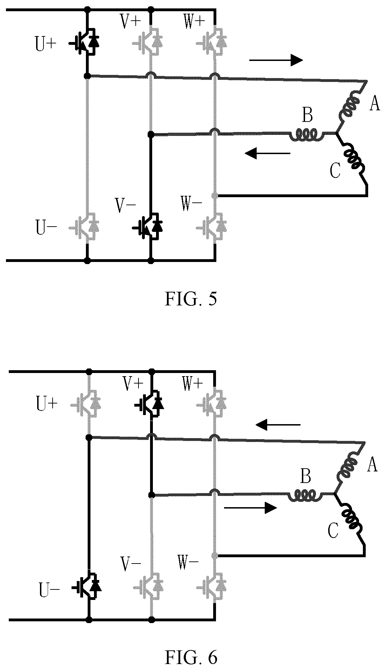

The example illustrated in FIG. 4 is used for illustration. To heat the motor, two-phase windings of the three-phase windings of the motor can be selected. A first circuit and a second circuit are formed based on the selected two-phase windings and the corresponding two-phases bridge arms. As an example, the selected two-phase windings are the above A-phase motor winding and the above B-phase motor winding. In this case, the first circuit is composed of the A-phase motor winding, the B-phase motor winding, and the upper bridge arm U+ of the U-phase drive bridge arm and the lower bridge arm V- of the V-phase drive bridge arm in the motor driver, as illustrated in FIG. 5, and the second circuit is composed of the A-phase motor winding, the B-phase motor winding, the lower bridge arm U- of the U-phase drive bridge arm, and the upper bridge arm V+ of the V-phase drive bridge arm, as illustrated in FIG. 6.

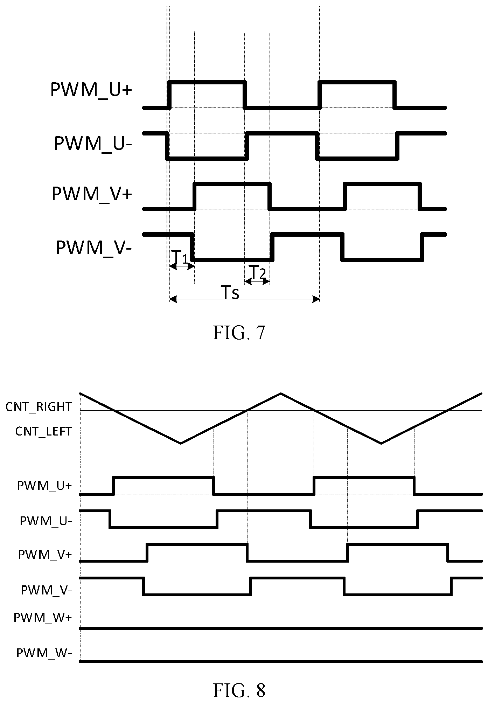

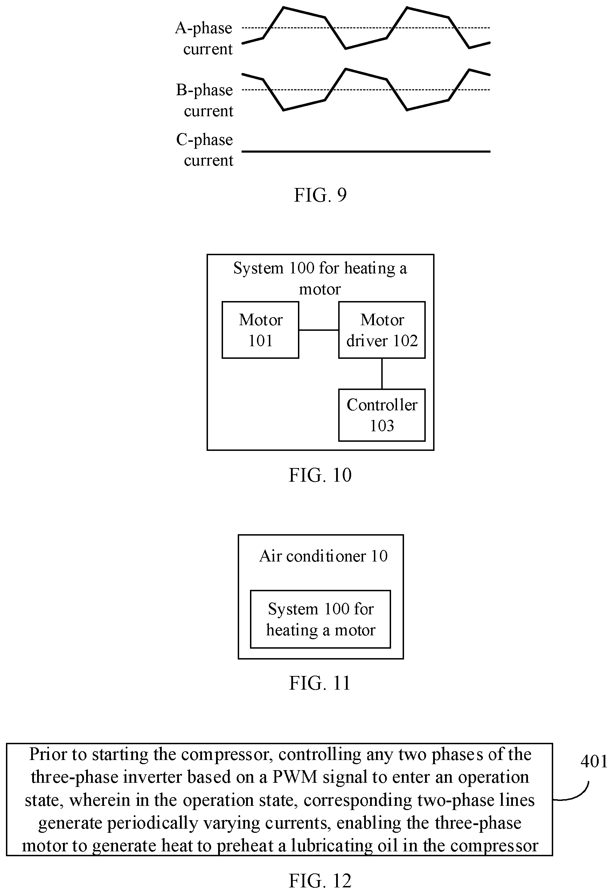

In this case, subsequent to obtaining the control cycle based on the target current frequency, a first period and a second period can be obtained based on the control cycle and the target current amplitude. As illustrated in FIG. 7, PWM_U+ and PWM_U- represent control voltages of the U-phase bridge arm, PWM_V+ and PWM_V- represent control voltages of the V-phase bridge arm, Ts represents the control cycle, $T_1$ represents the first period, and $T_2$ represents the second period. By controlling the power switching transistors in the U-phase bridge arm and the V-phase bridge arm, the first circuit is switched on in the first period and the second circuit is switched on in the second period, realizing voltages illustrated in FIG. 8 and currents fed into the windings as illustrated in FIG. 9, where PWM_W+ and PWM_W- represents control voltages of the W-phase bridge arm, and CNT_RIGHT and CNT_LEFT represent standards for switching on and interruption of the circuit. Therefore, an amplitude of the current can be adjusted through adjusting durations of the first period and the second period, and a frequency of the current can be adjusted through adjusting a duration of the control cycle.

Of course, the first circuit mentioned above may also be composed of the A-phase motor winding, the C-phase motor winding, and the upper bridge arm of the U-phase drive bridge arm and the lower bridge arm of the W-phase drive bridge arm in the motor driver, and the second circuit may also be composed of the A-phase motor winding, the C-phase motor winding, the lower bridge arm of the U-phase drive bridge arm, and the upper bridge arm of the W-phase drive bridge arm.

The first circuit mentioned above may also be composed of the B-phase motor winding, the C-phase motor winding, and the upper bridge arm of the V-phase drive bridge arm and the lower bridge arm of the W-phase drive bridge arm in the motor driver. The second circuit may also be composed of the B-phase motor winding, the C-phase motor winding, the lower bridge arm of the V-phase drive bridge arm, and the upper bridge arm of the W-phase drive bridge arm.

Therefore, heating of the motor can be realized by the two-phase bridge arms. In addition, since a two-phase modulation is adopted, the amplitude and the frequency of the current can be adjusted through adjusting the control cycle, the first period, and the second period, to better heat the motor and protect the motor winding and the power components in the circuit.

In some embodiments of the present disclosure, the target current amplitude and the target current frequency may be obtained by looking up a table based on the target heating amount.

With the method for heating the motor according to the embodiments of the present disclosure, the target heating amount is determined. The target current amplitude and the target current frequency are obtained based on the target heating amount. The drive bridge arms in the motor driver are controlled based on the target current amplitude and the target current frequency. In this way, the required alternating current is inputted into the motor winding. Heat is generated by the motor through the alternating current. Therefore, the motor is heated with the high efficiency without mounting the additional device, resulting in the relatively low costs. In addition, since the heating is performed by the alternating current, the motor can be preheated at the relatively small target current amplitude through inputting the high-frequency alternating current into the motor winding, protecting the motor winding and the power component in the circuit. Further, through adopting the two-phase modulation, the amplitude and the frequency of the current can be adjusted through adjusting the control cycle, the first period, and the second period, to better heat the motor and protect the motor winding and the power components in the circuit.

Further, a computer-readable storage medium is provided in the present disclosure.

In the embodiments of the present disclosure, the computer-readable storage medium stores a computer program. The computer program, when executed by a processor, implements the above method.

In the computer-readable storage medium according to the embodiments of the present disclosure, with the above method for heating the motor, the target heating amount is determined. The target current amplitude and the target current frequency are obtained based on the target heating amount. The drive bridge arms in the motor driver are controlled based on the target current amplitude and the target current frequency. In this way, the required alternating current is inputted into the motor winding. Heat is generated by the motor through the alternating current. Therefore, the motor is heated with the high efficiency without mounting the additional device, resulting in the relatively low costs. In addition, since the heating is performed by the alternating current, the motor can be preheated at the relatively small target current amplitude through inputting the high-frequency alternating current into the motor winding, protecting the motor winding and the power component in the circuit.

Further, a system for heating a motor is provided in the present disclosure.

FIG. 10 is a block diagram showing a structure of a system for heating a motor according to an embodiment of the present disclosure.

As illustrated in FIG. 10, the system 100 for heating the motor comprises a motor 101, a motor driver 102, and a controller 103.

Specifically, the motor driver 102 is connected to the motor 101. The controller 103 is connected to the motor driver 102 and configured to determine a target heating amount, obtain a target current amplitude and a target current frequency based on the target heating amount, and control any two-phase drive bridge arms in the motor driver 102 based on the target current amplitude and the target current frequency.

It should be noted that reference to other specific embodiments of the system for heating the motor according to the embodiments of the present disclosure can be made to the above method for heating the motor.

With the system for heating the motor according to the embodiments of the present disclosure, the target heating amount is determined by the controller connected to the motor driver. The target current amplitude and the target current frequency are obtained based on the target heating amount. The drive bridge arms in the motor driver are controlled based on the target current amplitude and the target current frequency. In this way, the required alternating current is inputted into the motor winding. Heat is generated by the motor through the alternating current. Therefore, the motor is heated with the high efficiency without mounting the additional device, resulting in the relatively low costs. In addition, since the heating is performed by the alternating current, the motor can be preheated at the relatively small target current amplitude through inputting the high-frequency alternating current into the motor winding, protecting the motor winding and the power component in the circuit.

Further, an air conditioner is provided in the present disclosure.

FIG. 11 is a block diagram showing a structure of an air conditioner according to an embodiment of the present disclosure.

As illustrated in FIG. 11, the air conditioner 10 comprises the above system 100 for heating the motor.

In the air conditioner according to the embodiments of the present disclosure, with the above system for heating the motor, the motor can generate the heat through the alternating current. Therefore, the motor is heated with the high efficiency without mounting the additional device, resulting in the relatively low costs. In addition, since the heating is performed by the alternating current, the motor can be preheated at the relatively small target current amplitude through inputting the high-frequency alternating current into the motor winding, protecting the motor winding and the power component in the circuit.

FIG. 12 is a flowchart illustrating a method for heating a motor according to yet another embodiment of the present disclosure.

As illustrated in FIG. 12, the method for heating the motor according to the embodiment of the present disclosure comprises an operation at a block.

At 401, prior to starting the compressor, any two phases of the three-phase inverter are controlled based on a PWM signal to enter an operation state. In the operation state, corresponding two-phase lines generate periodically varying currents, enabling the three-phase motor to generate heat to preheat a lubricating oil in the compressor.

It should be noted that, in the operation state, the corresponding two-phase lines generate the periodically varying currents on the corresponding windings of the three-phase motor. By utilizing the periodically varying currents, generation of a heat source of the iron loss positively related to the current frequency can be enhanced based on control of the current frequency. In this way, the lubricating oil inside the compressor can be preheated based on the heat generated by the three-phase motor while effectively reducing the current amplitude, which can reduce the electronic control loss during the preheating and improve operational reliability.

In some embodiments, controlling, based on the PWM signal, any two phases of the three-phase inverter to enter the operation state comprises: determining an operation cycle of the PWM signal of any two phases of the three-phase inverter based on a set switching frequency; determining a switch-on offset duration between any two phases of the three-phase inverter during the operation cycle based on the operation cycle and a preheating parameter; and outputting the PWM signal to the three-phase inverter based on the operation cycle and the switch-on offset duration. The switch-on offset duration is a difference between switch-on starting time points of any two phases of the three-phase inverter. A switch-on width of a third phase other than any two phases of the three-phase inverter is zero.

It should be understood that the above set switching frequency is used to determine the operation cycle of two-phase phase-shift control. Exemplarily, the set switching frequency is required to satisfy the following conditions: 1) lower than an allowable switching frequency fsw_max of a hardware circuit or component; 2) exceed an audible range of a user (20 Hz to 16 kHz), e.g., 20 kHz; 3) minimize electronic control heating; or 4) lower than an allowable value of the current frequency.

In this way, the PWM signal can be generated at the set switching frequency to control the three-phase inverter to enter the operation state.

Exemplarily, determining the switch-on offset duration between any two phases of the three-phase inverter during the operation cycle based on the operation cycle and the preheating parameter comprises: determining the switch-on offset duration between the two phases during the operation cycle based on at least one of the operation cycle, power required for the preheating, a voltage required for the preheating, and a current required for the preheating.

It should be noted that, based on control of the above switch-on offset duration (also known as a preheating phase shift width), a voltage waveform output from each phase entering the operation state can generate a corresponding phase difference (or time difference) with the other two phases. A periodic variation of the phase difference between voltages generates the periodically varying currents, which causes the motor to experience the copper loss and the iron loss, generating the heat.

Exemplarily, a method for calculating the above switch-on offset duration is Tshift=Tcycle*Vtrg/Vdc, where Tshift represents the switch-on offset duration, i.e., a difference between switch-on starting time points of two phases entering the operation state, Tcycle represents the operation cycle, Vtrg represents a minimum preheating voltage satisfying power required the preheating, in which the preheating voltage can be measured directly through a voltage measurement circuit, and Vdc represents a direct current bus voltage of the three-phase inverter. An on-time width of the two phases entering the operation state in each operation cycle is Ton=K*Tcycle, while an on-time width of the other phase is 0, where K is an adjustable proportion coefficient having a value ranging from 0 to 1. Preferably, K=0.5, which helps improve reliability of control.

Exemplarily, the operation state comprises a first operation state, a second operation state, and a third operation state. In the first operation state, a first phase and a second phase of the three-phase inverter are phase-shifted and switched on. In the second operation state, the second phase and a third phase of the three-phase inverter are phase-shifted and switched on. In the third operation state, the third phase and the first phase of the three-phase inverter are phase-shifted and switched on.

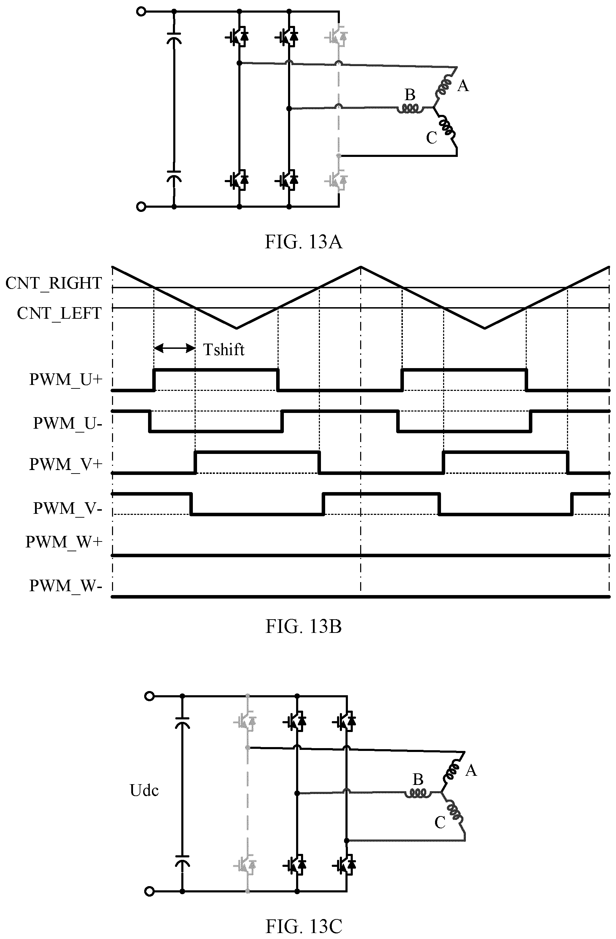

FIG. 13A to FIG. 13F each are a schematic diagram showing a winding state or PWM signal switching timing in each operation state in an application example.

Exemplarily, in the first operation state, phase-shift and switching-on control of phase U and phase V of the three-phase inverter can be performed based on the PWM signal, enabling an A-phase winding and a B-phase winding to enter the operation state. FIG. 13A is a schematic diagram showing the winding state in the first operation state. FIG. 13B is a schematic diagram showing the PWM signal switching timing in the first operation state.

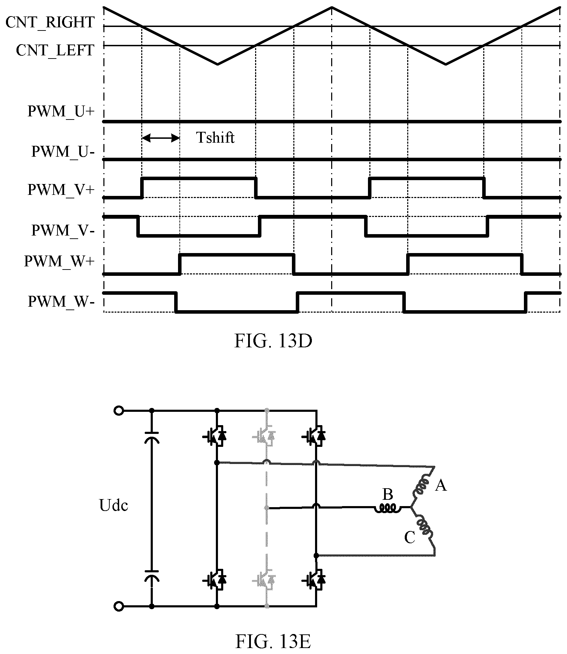

Exemplarily, in the second operation state, phase-shift and switching-on control of phase V and phase W of the three-phase inverter can be performed based on the PWM signal, enabling the B-phase winding and a C-phase winding to enter the operation state. FIG. 13C is a schematic diagram showing the winding state in the second operation state. FIG. 13D is a schematic diagram showing the PWM signal switching timing in the second operation state.

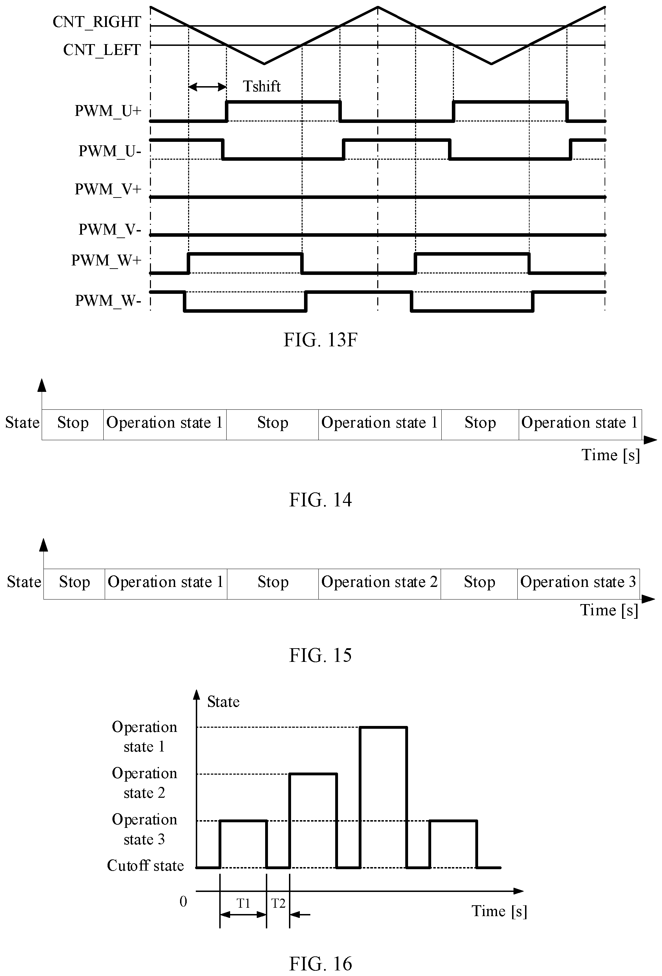

Exemplarily, in the third operation state, phase-shift and switching-on control of phase W and phase U of the three-phase inverter can be performed based on the PWM signal, enabling the C-phase winding and the A-phase winding to enter the operation state. FIG. 13E is a schematic diagram showing the winding state in the third operation state. FIG. 13F is a schematic diagram showing the PWM signal switching timing in the third operation state.

It should be understood that, according to the embodiments of the present disclosure, the current frequency in the operation state can be effectively increased based on the two-phase phase-shift control. Compared with conventional preheating of the direct-current current winding or low-frequency (e.g., 0.1 Hz) current winding, the lubricating oil inside the compressor can be preheated based on the heat generated by the iron loss of the three-phase motor while effectively reducing the current amplitude, which can reduce the electronic control loss during the preheating and improve the operational reliability.

In some embodiments, a method for preheating control of the compressor further comprises: controlling the three-phase inverter to switch between at least two of the first operation state, the second operation state, and the third operation state in a process of preheating the lubricating oil in the compressor; and/or recording a current operation state corresponding to exiting the process of preheating the lubricating oil in the compressor, and controlling the three-phase inverter to operate in another operation state different from the current operation state when the process of preheating the lubricating oil in the compressor is initiated next time.

In this way, the operation state can be switched in a process of preheating the compressor, and/or the operation state can be switched in response to initiating preheating of the compressor. Operation durations of individual bridge arms are evenly distributed, which makes the heat distribution across a module or the switching transistor more uniform to avoid localized heat accumulation. Therefore, service lives of individual switching transistors can be balanced to prolong an overall service life of the three-phase inverter.

In an application example, in a single process of preheating the compressor, one of the above three operation states can be used for preheating control. For example, in response to determining that the compressor needs to be started for the preheating, one of the three operation states is selected for operation, until a completion. As illustrated in FIG. 14, an operation state 1 can be selected for preheating control until the preheating control is exited. It should be noted that, in response to determining that the preheating of the compressor needs to be started next time, another operation state can be selected for preheating control. In this way, switching between the operation states can be realized between different times of preheating of the compressor.

In another application example, switching between the operation states may be performed during the preheating of the compressor. For example, in response to determining that the preheating of the compressor needs to be started, switching control is performed between respective operation states based on a specified switching sequence, e.g., as illustrated in FIG. 15, based on a switching sequence of operation state 1 → operation state 2 → operation state 3, until a completion. It should be noted that, in response to determining that the preheating of the compressor needs to be started next time, another operation state can be selected for the preheating control. In this way, switching between the operation states can be further realized between different times of preheating of the compressor.

Exemplarily, the method further comprises, prior to controlling, based on the PWM signal, any two phases of the three-phase inverter to enter the operation state comprises: obtaining a temperature value characterizing a temperature of the lubricating oil, and determining, based on the temperature value, whether a need of preheating the lubricating oil exists.

It should be understood that, according to the embodiments of the present disclosure, the temperature of the lubricating oil in the compressor may be monitored. A value of the monitored temperature is compared with a first set temperature threshold. When the value of the monitored temperature is lower than the first set temperature threshold, the need of preheating the lubricating oil is determined to exist, and the above preheating control of the compressor is initiated.

In some embodiments, controlling the three-phase inverter to switch between the at least two of the first operation state, the second operation state, and the third operation state comprises controlling the three-phase inverter to enter a cutoff state between two different operation states.

It should be noted that the cutoff state means to stop generating a current on the windings of the three-phase motor. By introducing the cutoff state between the two different operation states, a sudden change of the current during the switching can be effectively avoided.

Exemplarily, controlling the three-phase inverter to enter the cutoff state comprises one of: controlling all switching transistors of the three-phase inverter to be switched off; controlling all upper bridge arms of the three-phase inverter to be switched on; and subsequent to controlling all the switching transistors of the three-phase inverter to be switched off, controlling upper bridge arms of two phases corresponding to a next operation state to be switched off, and controlling lower bridge arms of the two phases corresponding to the next operation state to be switched on or switched off based on a set duty cycle.

It should be noted that when the switching transistors of the three-phase inverter are powered by a self-excited power supply, the cutoff state may be implemented using the above method of "subsequent to controlling all the switching transistors of the three-phase inverter to be switched off, controlling upper bridge arms of two phases corresponding to a next operation state to be switched off, and controlling lower bridge arms of the two phases corresponding to the next operation state to be switched on or switched off based on a set duty cycle", ensuring switching performance of the upper bridge arm.

In an application example, as illustrated in FIG. 16, in response to determining that the need of preheating the lubricating oil exists, the three-phase motor of the compressor can be controlled to switch based on a sequence of operation state 3 → operation state 2 → operation state 1. Subsequent to operation for a duration of T1 in a previous operation state, the motor is switched to the cutoff state for a duration of T2 and operates for the duration of T2 in a next operation state. In this way, alternate switching of the operation states during the preheating can be realized. The above durations of T1 and T2 may be reasonably determined based on test data. For example, the duration of T1 may be 10 min, and the duration of T2 may be reasonably determined based on the operation cycle, e.g., three operation cycles.

It should be understood that when the value of the monitored temperature of the lubricating oil is higher than a second set temperature threshold, a condition for exiting the current preheating control of the compressor is determined to be satisfied, and thus the current preheating control of the compressor is exited.

In some embodiments, to effectively prevent untimely heat dissipation due to the electronic control loss during the preheating of the compressor, an intermittent operation mechanism may also be introduced into a preheating control process of the compressor. When a cumulative operation duration of the operation state of the three-phase inverter has reached a duration of tr, the inverter operates intermittently for a duration of ts, and the three-phase inverter is controlled to enter the operation state. In this case, the duration of tr > the above duration of T1, and the duration of ts > the above duration of T2. It should be noted that the above duration of T2 is used to avoid a sudden change of the current during the switching of the operation states, and the duration of ts is used to control the three-phase inverter to stop operation, i.e., to stop the heat generation of the three-phase motor during the preheating of the compressor.

To realize the method according to the embodiments of the present disclosure, an apparatus for preheating control of a compressor is further provided according to the embodiments of the present disclosure. The apparatus for controlling the preheating of the compressor corresponds to the above method for controlling the preheating of the compressor. The steps in the above embodiments of the method for controlling the preheating of the compressor are also fully applicable to the embodiments of the apparatus for controlling the preheating of the compressor.

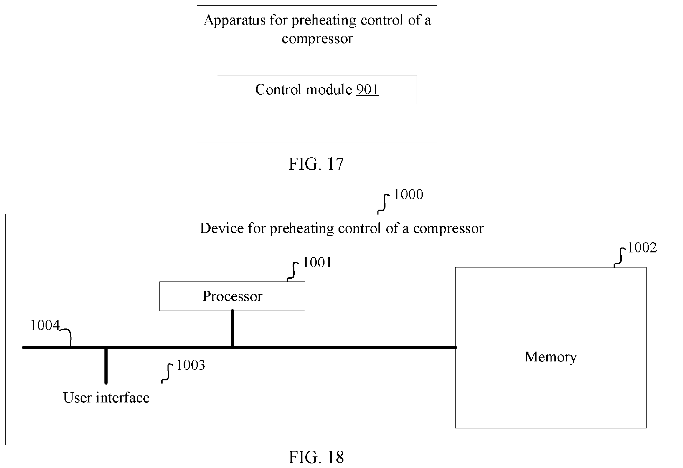

As illustrated in FIG. 17, the apparatus for controlling the preheating of the compressor comprises a control module 901 configured to control any two phases of a three-phase inverter to enter an operation state based on a PWM signal, prior to staring the compressor.

In the operation state, corresponding two-phase lines generate periodically varying currents, enabling a three-phase motor to generate heat to preheat a lubricating oil in the compressor.

In some embodiments, the control module 901 is specifically configured to: determine an operation cycle of the PWM signal of any two phases of the three-phase inverter based on a set switching frequency; determine a switch-on offset duration between any two phases of the three-phase inverter during the operation cycle based on the operation cycle and a preheating parameter; and output the PWM signal to the three-phase inverter based on the operation cycle and the switch-on offset duration. The switch-on offset duration is a difference between switch-on starting time points of any two phases of the three-phase inverter. A switch-on width of a third phase other than any two phases of the three-phase inverter is zero.

In some embodiments, the control module 901 being configured to determine the switch-on offset duration between any two phases of the three-phase inverter during the operation cycle based on the operation cycle and the preheating parameter comprises: determining the switch-on offset duration between any two phases of the three-phase inverter during the operation cycle based on at least one of the operation cycle, power required for the preheating, a voltage required for the preheating, and a current required for the preheating.

In some embodiments, the control module 901 is further configured to, prior to controlling, based on the PWM signal, any two phases of the three-phase inverter to enter the operation state: obtain a temperature value characterizing a temperature of the lubricating oil, and determining, based on the temperature value, whether a need of preheating the lubricating oil exists.

In some embodiments, the operation state comprises a first operation state, a second operation state, and a third operation state. The control module 901 is further configured to: control the three-phase inverter to switch between at least two of the first operation state, the second operation state, and the third operation state in a process of preheating the lubricating oil in the compressor; and/or record a current operation state corresponding to exiting the process of preheating the lubricating oil in the compressor, and control the three-phase inverter to operate in another operation state different from the current operation state when the process of preheating the lubricating oil in the compressor is initiated next time. In the first operation state, a first phase and a second phase of the three-phase inverter are phase-shifted and switched on. In the second operation state, the second phase and a third phase of the three-phase inverter are phase-shifted and switched on. In the third operation state, the third phase and the first phase of the three-phase inverter are phase-shifted and switched on.

In some embodiments, the control module 901 being configured to control the three-phase inverter to switch between the at least two of the first operation state, the second operation state, and the third operation state comprises: controlling the three-phase inverter to enter a cutoff state between two different operation states.

In some embodiments, the control module 901 being configured to control the three-phase inverter to enter the cutoff state comprises one of: controlling all switching transistors of the three-phase inverter to be switched off; controlling all upper bridge arms of the three-phase inverter to be switched on; and subsequent to the controlling all the switching transistors of the three-phase inverter to be switched off, controlling upper bridge arms of two phases corresponding to a next operation state to be switched off, and controlling lower bridge arms of the two phases corresponding to the next operation state to be switched on or switched off based on a set duty cycle.

In practice, the control module 901 can be realized by a processor of a device for preheating control of a compressor. Of course, the processor needs to execute a computer program in a memory to realize a function of the processor.

It should be noted that, in terms of controlling the preheating of the compressor by the apparatus for controlling the preheating of the compressor according to the above embodiments, the division of the above program modules are merely illustrative. In practice, the above processings can be assigned to be completed by different program modules as desired, i.e., the internal structure of the apparatus can be divided into different program modules to complete all or part of the processings described above. In addition, the above embodiments of the apparatus for controlling the preheating of the compressor belong to the same concept as the embodiments of the method for controlling the preheating of the compressor. Reference to a specific implementation process of the apparatus for controlling the preheating of the compressor can be made to the method embodiments, and thus details thereof will be omitted here.

Based on hardware implementations of the above program modules and to realize the method according to the embodiments of the present disclosure, a device for preheating control of a compressor is further provided according to the embodiments of the present disclosure. FIG. 18 illustrates only an exemplary structure but not an entire structure of the device for controlling the preheating of the compressor. Some or all of the structure illustrated in FIG. 18 may be implemented as desired.

As illustrated in FIG. 18, the device 1000 for controlling the preheating of the compressor according to the embodiments of the present disclosure comprises at least one processor 1001, a memory 1002, and a user interface 1003. Various components in the device 1000 for controlling the preheating of the compressor are coupled together via a bus system 1004. It should be understood that the bus system 1004 is configured to enable connections and communication between these components. In addition to a data bus, the bus system 1004 further comprises a power bus, a control bus, and a state signal bus. However, for clarity of description, various buses are collectively labeled as the bus system 1004 in FIG. 18.

The user interface 1003 may comprise a display, a keyboard, a mouse, a trackball, a click wheel, a key, a button, a touch pad, or a touch screen.

The memory 1002 according to the embodiments of the present disclosure is configured to store various types of data to support operations of the device for controlling the preheating of the compressor. Examples of such data comprise any computer program for operations on the device for controlling the preheating of the compressor.

The method for controlling the preheating of the compressor according to the embodiments of the present disclosure may be applied in, or implemented by, the processor 1001. The processor 1001 may be an integrated circuit chip having signal processing capabilities. In an implementation, actions of the method for controlling the preheating of the compressor may be accomplished by an integrated logic circuit in hardware in the processor 1001 or by instructions in the form of software. The above processor 1001 may be a general-purpose processor, a Digital Signal Processor (DSP), or other programmable logic devices, a discrete gate or a transistor logic device, and a discrete hardware component. The method, actions, and logic block diagrams according to any of the embodiments of the present disclosure may be implemented or performed by the processor 1001. The general-purpose processor may be a microprocessor, or the processor may further be any conventional processor, etc. The actions of the method according to any of the embodiments of the present disclosure may be directly embodied as performed by a hardware decoding processor or performed by a combination of a hardware module and a software module in a decoding processor. The software module may be located in a random memory. The storage medium is located in the memory 1002. The processor 1001 reads information in the memory 1002 and completes the actions of the method for controlling the preheating of the compressor according to the embodiments of the present disclosure in combination with the hardware.

In exemplary embodiments, the device for controlling the preheating of the compressor may be implemented with one or more Application Specific Integrated Circuits (ASICs), Digital Signal Processors (DSPs), Programmable Logic Devices (PLDs), Complex Programmable Logic Devices (CPLDs), Field Programmable Gate Arrays (FPGAs), general-purpose processors, controllers, Micro Controller Units (MCU), microprocessors, or other electronic components, for performing the above described method.

It should be understood that the memory 1002 may be a volatile memory or a non-volatile memory, or may comprise both a volatile and a non-volatile memory. The non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a flash memory, a magnetic surface memory, an optical disk, or a Compact Disc Read-Only Memory (CD-ROM). The magnetic surface memory can be a disk memory or a tape memory. The volatile memory may be a Random Access Memory (RAM), which is used as an external cache. By way of illustrative but not limiting description, many forms of RAM are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), and a Direct Rambus Random Access Memory (DRRAM). The memory described in the embodiments of the present disclosure is intended to comprise, but is not limited to, these and any other suitable types of memory.

In exemplary embodiments, an air conditioner is further provided according to the embodiments of the present disclosure. The air conditioner comprises: a compressor comprising a three-phase motor and a three-phase inverter configured to drive the three-phase motor. The air conditioner further comprises: a processor and a memory configured to store a computer program executable on the processor. The processor performs, when executing the computer program, the steps of the method for controlling the preheating of the compressor according to the embodiments of the present disclosure, and can be described with reference to the above contents, and thus details thereof will be omitted herein.

In exemplary embodiments, a storage medium is further provided according to the embodiments of the present disclosure, i.e., a computer storage medium, which may specifically be a computer-readable storage medium, such as the memory 1002 for storing a computer program. The computer program is executable by the processor 1001 of the device for controlling the preheating of the compressor to accomplish the steps described in the method according to the embodiments of the present disclosure. The computer-readable storage medium may be a memory such as a ROM, a PROM, an EPROM, an EEPROM, a Flash Memory, a magnetic surface memory, an optical disk, or a CD-ROM.

It should be noted that, the logics and/or steps represented in the flowchart or described otherwise herein can be for example considered as a list of ordered executable instructions for implementing logic functions, and can be embodied in any computer-readable medium that is to be used by or used with an instruction execution system, apparatus, or device (such as a computer-based system, a system comprising a processor, or any other system that can retrieve and execute instructions from an instruction execution system, apparatus, or device). For the present disclosure, a "computer-readable medium" can be any apparatus that can contain, store, communicate, propagate, or transmit a program to be used by or used with an instruction execution system, apparatus, or device. More specific examples of computer-readable mediums comprise, as a non-exhaustive list: an electrical connector (electronic device) with one or more wirings, a portable computer disk case (magnetic devices), a Random Access Memory (RAM), a Read Only Memory (ROM), an Erasable Programmable Read Only Memory (EPROM or flash memory), a fiber optic device, and a portable Compact Disk Read Only memory (CDROM). In addition, the computer-readable medium may even be paper or other suitable medium on which the program can be printed, as the program can be obtained electronically, e.g., by optically scanning the paper or the other medium, and then editing, interpreting, or otherwise processing the scanning result when necessary, and then stored in a computer memory.

It should be understood that each part of the present disclosure may be realized by hardware, software, firmware, or a combination thereof. In the above embodiments, a plurality of steps or methods may be realized by software or firmware stored in the memory and executed by an appropriate instruction execution system. For example, when it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a Programmable Gate Array (PGA), a Field Programmable Gate Array (FPGA), etc.

Reference throughout this specification to "an embodiment", "some embodiments", "an example", "a specific example", or "some examples" means that a particular feature, structure, material, or characteristic described in connection with the embodiment or example is comprised in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples.

In the description of the embodiments of the present disclosure, the orientation or the position indicated by technical terms such as "center", "longitudinal", "transverse", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation or the position as shown in the drawings, and is only for the convenience of describing the embodiments of the present disclosure and simplifying the description, rather than indicating or implying that the pointed device or element must have a specific orientation, or be constructed and operated in a specific orientation, and therefore cannot be understood as a limitation of the present disclosure.

In addition, terms "first" and "second" are only used for descriptive purposes, and cannot be understood as indicating or implying relative importance or implicitly indicating the number of indicated technical features. Therefore, the features associated with "first" and "second" may explicitly or implicitly comprise at least one of the features. In the description of the present disclosure, "plurality" means at least two, unless otherwise specifically defined.

In the present disclosure, unless otherwise clearly specified and limited, terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those of ordinary skill in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

Although embodiments of the present disclosure have been shown and described above, it should be understood that above embodiments are merely exemplary, and cannot be construed to limit the present disclosure. For those skilled in the art, changes, alternatives, and modifications can be made to the embodiments without departing from the scope of the present disclosure.

**Claims**

1. A method for heating a motor, the method comprising:

   controlling, in response to determining that the motor needs to be preheated, any two-phase drive bridge arms in a motor driver to generate periodically varying currents in corresponding two-phase circuits to realize preheating of the motor.

2. The method according to claim 1, wherein said controlling the any two-phase drive bridge arms in the motor driver comprises:

   determining a target heating amount;
   obtaining a target current amplitude and a target current frequency based on the target heating amount; and
   controlling the any two-phase drive bridge arms in the motor driver based on the target current amplitude and the target current frequency.

3. The method according to claim 2, wherein said controlling the any two-phase drive bridge arms in the motor driver based on the target current amplitude and the target current frequency comprises:

   obtaining a control cycle based on the target current frequency, and obtaining a first time period and a second time period based on the control cycle and the target current amplitude; and
   controlling, in each control cycle, a first circuit to be switched on for the first time period and a second circuit to be switched on for the second time period, wherein each of the first circuit and the second circuit is composed of motor windings and drive bridge arms, and a current direction of the first circuit and a current direction of the second circuit are opposite when the first circuit and the second circuit are switched on.

4. The method according to claim 3, wherein:

   the first circuit is composed of an A-phase motor winding, a B-phase motor winding, and an upper bridge arm of a U-phase drive bridge arm in the motor driver (102) and a lower bridge arm of a V-phase drive bridge arm in the motor driver; and
   the second circuit is a composed of the A-phase motor winding, the B-phase motor winding, a lower bridge arm of the U-phase drive bridge arm, and an upper bridge arm of the V-phase drive bridge arm.

5. The method according to claim 3, wherein:

   the first circuit is composed of an A-phase motor winding, a C-phase motor winding, and an upper bridge arm of a U-phase drive bridge arm in the motor driver (102) and a lower bridge arm of a W-phase drive bridge arm in the motor driver; and
   the second circuit is composed of the A-phase motor winding, the C-phase motor winding, a lower bridge arm of the U-phase drive bridge arm, and an upper bridge arm of the W-phase drive bridge arm.

6. The method according to claim 3, wherein:

   the first circuit is composed of a B-phase motor winding, a C-phase motor winding, and an upper bridge arm of a V-phase drive bridge arm in the motor driver and a lower bridge arm of a W-phase drive bridge arm in the motor driver; and
   the second circuit is composed of the B-phase motor winding, the C-phase motor winding, a lower bridge arm of the V-phase drive bridge arm, and an upper bridge arm of the W-phase drive bridge arm.

7. The method according to any one of claims 2 to 6, wherein said determining the target heating amount comprises:

   obtaining an ambient temperature of an environment in which the motor is located;
   determining, based on the ambient temperature, whether the motor needs to be preheated; and
   obtaining, in response to determining that the motor needs to be preheated, the target heating amount based on the ambient temperature.

8. The method according to any one of claims 2 to 7, wherein the target current amplitude and the target current frequency are obtained by looking up a table based on the target heating amount, a value of the target current frequency being greater than 10 kHz.

9. The method according to claim 1, wherein the motor driver is a three-phase inverter, and said controlling the any two-phase drive bridge arms in the motor driver comprises:

determining an operation cycle of the any two-phase drive bridge arms based on a set switching frequency;
determining a switch-on offset duration between two phases during the operation cycle based on the operation cycle and a preheating parameter; and
outputting a PWM signal to the three-phase inverter based on the operation cycle and the switch-on offset duration, enabling the two phases to enter an operation state,
wherein the switch-on offset duration is a difference between switch-on starting time points of the any two-phase drive bridge arms, and a switch-on width of a third phase other than the any two-phase drive bridge arms is zero.

10. The method according to claim 9, wherein said determining the switch-on offset duration between the two phases during the operation cycle based on the operation cycle and the preheating parameter comprises:
determining the switch-on offset duration between the two phases during the operation cycle based on at least one of the operation cycle, power required for the preheating, a voltage required for the preheating, and a current required for the preheating.

11. The method according to claim 9 or 10, wherein the operation state comprises a first operation state, a second operation state, and a third operation state, and the method further comprises:

controlling the three-phase inverter to switch between at least two of the first operation state, the second operation state, and the third operation state in a process of preheating the motor; and/or
recording a current operation state corresponding to exiting the process of preheating the motor, and controlling the three-phase inverter to operate in an other operation state different from the current operation state when the process of preheating the motor is initiated next time, wherein:

in the first operation state, a first phase and a second phase of the three-phase inverter are phase-shifted and switched on;
in the second operation state, the second phase and a third phase of the three-phase inverter are phase-shifted and switched on; and
in the third operation state, the third phase and the first phase of the three-phase inverter are phase-shifted and switched on.

12. The method according to claim 11, wherein said controlling the three-phase inverter to switch between the at least two of the first operation state, the second operation state, and the third operation state comprises:
controlling the three-phase inverter to enter a cutoff state between two different operation states.

13. The method according to claim 12, wherein said controlling the three-phase inverter to enter the cutoff state comprises one of:

controlling all switching transistors of the three-phase inverter to be switched off;
controlling all upper bridge arms of the three-phase inverter to be switched on; and
subsequent to said controlling all the switching transistors of the three-phase inverter to be switched off, controlling upper bridge arms of two phases corresponding to a next operation state to be switched off, and controlling lower bridge arms of the two phases corresponding to the next operation state to be switched on or switched off based on a set duty cycle.

14. A system for heating a motor, the system comprising:

the motor;
a motor driver connected to the motor; and
a controller comprising a processor and a memory for storing a computer program executable on the processor, wherein the processor performs, when executing the computer program, steps of a method according to any one of claims 1 to 13.

15. An air conditioner, comprising a system for heating a motor according to claim 14.

16. A computer-readable storage medium, having a computer program stored thereon, wherein the computer program, when executed by a processor, implements steps of a method according to any one of claims 1 to 13.

FIG. 1

| Determining a target heating amount | S11 |

| Obtaining a target current amplitude and a target current frequency based on the target heating amount | S12 |

| Controlling any two-phase drive bridge arms in the motor driver based on the target current amplitude and the target current frequency | S13 |

FIG. 2

Obtaining a control cycle based on the target current frequency, and obtaining a first time period and a second time period based on the control cycle and the target current amplitude

S31

Controlling, in each control cycle, a first circuit to be switched on for the first time period and a second circuit to be switched on for the second time period, wherein each of the first circuit and the second circuit is composed of motor windings and the drive bridge arms, and current directions of the first circuit and the second circuit are opposite when the first circuit and the second circuit are switched on

S32

FIG. 3

5

Winding

6

Winding current

FIG. 4

FIG. 5

FIG. 6

PWM_U+

PWM_U-

PWM_V+

PWM_V-

T1

T2

Ts

FIG. 7

CNT_RIGHT

CNT_LEFT

PWM_U+

PWM_U-

PWM_V+

PWM_V-

PWM_W+

PWM_W-

FIG. 8

A-phase current

B-phase current

C-phase current

FIG. 9

System 100 for heating a motor

Motor 101

Motor driver 102

Controller 103

FIG. 10

Air conditioner 10

System 100 for heating a motor

FIG. 11

Prior to starting the compressor, controlling any two phases of the three-phase inverter based on a PWM signal to enter an operation state, wherein in the operation state, corresponding two-phase lines generate periodically varying currents, enabling the three-phase motor to generate heat to preheat a lubricating oil in the compressor

401

FIG. 12

FIG. 13A

CNT_RIGHT

CNT_LEFT

Tshift

PWM_U+

PWM_U-

PWM_V+

PWM_V-

PWM_W+

PWM_W-

FIG. 13B

Udc

FIG. 13C

FIG. 13D

FIG. 13E

FIG. 13F

FIG. 14

FIG. 15

FIG. 16

Apparatus for preheating control of a
compressor

Control module 901

FIG. 17

1000

Device for preheating control of a compressor

1002

1001

Processor

1004

Memory

1003

User interface

FIG. 18

## INTERNATIONAL SEARCH REPORT

| International application No. |
| --- |
| **PCT/CN2023/102462** |

### A. CLASSIFICATION OF SUBJECT MATTER

H02P29/62(2016.01)i; F24F11/48(2018.01)i

According to International Patent Classification (IPC) or to both national classification and IPC

### B. FIELDS SEARCHED

Minimum documentation searched (classification system followed by classification symbols)

IPC:H02P,F24F11

Documentation searched other than minimum documentation to the extent that such documents are included in the fields searched

Electronic data base consulted during the international search (name of data base and, where practicable, search terms used)

CNTXT, ENTXT, ENTXTC, VEN, CNKI: 电动机, 电机, 马达, 预加热, 预热, 加热, 加温, 升温; 高频, 频率; 两相, 二相, 2相, 变变, 交流, 交替, 铁耗, 铁损, 涡流损耗, 磁滞损耗; compressor, motor, preheat, heat, current, frequency, high, Hysteresis loss, Vortex loss, iron loss

### C. DOCUMENTS CONSIDERED TO BE RELEVANT

| Category* | Citation of document, with indication, where appropriate, of the relevant passages | Relevant to claim No. |
| --- | --- | --- |
| X | CN 112032978 A (QINGDAO HAIER AIR-CONDITIONER ELECTRIC CO., LTD. et al.) 04 December 2020 (2020-12-04)<br>description, paragraphs 46-100, and figures 1-5 | 1-10, 14-16 |
| A | CN 109217776 A (SHENZHEN INVT ELECTRIC CO., LTD.) 15 January 2019 (2019-01-15)<br>entire document | 1-16 |
| A | CN 114413424 A (FOSHAN SHUNDE MIDEA ELECTRONIC TECHNOLOGY CO., LTD. et al.) 29 April 2022 (2022-04-29)<br>entire document | 1-16 |
| A | CN 114459128 A (FOSHAN SHUNDE MIDEA ELECTRONIC TECHNOLOGY CO., LTD. et al.) 10 May 2022 (2022-05-10)<br>entire document | 1-16 |
| A | CN 1953317 A (SAMSUNG ELECTRONICS CO., LTD.) 25 April 2007 (2007-04-25)<br>entire document | 1-16 |
| A | US 2012111043 A1 (HATAKEYAMA KAZUNORI et al.) 10 May 2012 (2012-05-10)<br>entire document | 1-16 |

☑ Further documents are listed in the continuation of Box C.    ☑ See patent family annex.

| | |
| --- | --- |
| *  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **07 September 2023** | **22 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/102462** |

### C.    DOCUMENTS CONSIDERED TO BE RELEVANT

| Category* | Citation of document, with indication, where appropriate, of the relevant passages | Relevant to claim No. |
|---|---|---|
| A | US 2017311391 A1 (MGI COUTIER) 26 October 2017 (2017-10-26)<br>entire document | 1-16 |
| A | US 2022223937 A1 (FORD GLOBAL TECHNOLOGIES, LLC) 14 July 2022 (2022-07-14)<br>entire document | 1-16 |

Form PCT/ISA/210 (second sheet) (July 2022)

## INTERNATIONAL SEARCH REPORT
### Information on patent family members

| International application No. |
|---|
| **PCT/CN2023/102462** |

| Patent document cited in search report | | | Publication date (day/month/year) | Patent family member(s) | | | Publication date (day/month/year) |
|---|---|---|---|---|---|---|---|
| CN | 112032978 | A | 04 December 2020 | None | | | |
| CN | 109217776 | A | 15 January 2019 | CN | 109217776 | B | 20 October 2020 |
| CN | 114413424 | A | 29 April 2022 | CN | 114413424 | B | 14 July 2023 |
| CN | 114459128 | A | 10 May 2022 | None | | | |
| CN | 1953317 | A | 25 April 2007 | KR | 20070042401 | A | 23 April 2007 |
| | | | | KR | 101253232 | B1 | 16 April 2013 |
| | | | | CN | 100477478 | C | 08 April 2009 |
| US | 2012111043 | A1 | 10 May 2012 | US | 9263984 | B2 | 16 February 2016 |
| | | | | JP | 2011038689 | A | 24 February 2011 |
| | | | | JP | 4931970 | B2 | 16 May 2012 |
| | | | | EP | 2466228 | A1 | 20 June 2012 |
| | | | | EP | 2466228 | A4 | 29 July 2015 |
| | | | | EP | 2466228 | B1 | 24 August 2016 |
| | | | | ES | 2592934 | T3 | 02 December 2016 |
| | | | | AU | 2010283408 | A1 | 02 February 2012 |
| | | | | AU | 2010283408 | B2 | 07 March 2013 |
| | | | | WO | 2011018863 | A1 | 17 February 2011 |
| | | | | CN | 102472532 | A | 23 May 2012 |
| | | | | CN | 102472532 | B | 09 July 2014 |
| US | 2017311391 | A1 | 26 October 2017 | FR | 3050489 | A1 | 27 October 2017 |
| | | | | FR | 3050489 | B1 | 06 April 2018 |
| | | | | US | 10757763 | B2 | 25 August 2020 |
| US | 2022223937 | A1 | 14 July 2022 | DE | 102022100433 | A1 | 14 July 2022 |
| | | | | CN | 114763078 | A | 19 July 2022 |

Form PCT/ISA/210 (patent family annex) (July 2022)

**REFERENCES CITED IN THE DESCRIPTION**

**Patent documents cited in the description**

- CN 202211268900
- CN 202211403253